# EUROPÄISCHE PATENTANMELDUNG

(11) **EP 2 528 338 A1**
(43) Veröffentlichungstag der Anmeldung: **28.11.2012**
(21) Anmeldenummer: 12004023.3
(22) Anmeldetag: 23.05.2012
(51) Int. Cl.: H04N 21/236, H04N 21/262

(54) **Verfahren und Vorrichtung zum Bereitstellen eines IP-Fernsehprogramms**

(30) Priorität: 24.05.2011 DE 102011102348
(71) Anmelder: EURO I Fernsehproduktions- und Betriebs GmbH, 20355 Hamburg (DE)
(72) Erfinder: Harbs, Volker, 22393 Hamburg (DE)
(74) Vertreter: DTS München

(57) **Zusammenfassung**

Die Erfindung betrifft ein Verfahren zum Bereitstellen eines IP-Fernsehprogramms für potentielle Zuschauer, umfassend die folgenden Schritte:
- Bereitstellen einer über eine Bewegtbild-URL (21) und ein paketvermitteltes Netzwerk (30) erreichbaren Zugriffsmöglichkeit auf das IP-Fernsehprogramm (10);
- Beschreiben mindestens einer Application Information Table AIT (51) mit Zugriffsdaten (52) für den Zugriff auf das IP-Fernsehprogramm (10);
- Übermitteln der beschriebenen AIT (51) zu potentiellen Zuschauern (40) als Teil mindestens eines DVB-Transportstroms (61) auf einem konventionellen Übertragungsweg (70).

Zudem betrifft die Erfindung eine Vorrichtung, mittels welcher ein derartiges Verfahren ausführbar ist.

## Beschreibung

Die Erfindung betrifft ein Verfahren und eine Vorrichtung zum Bereitstellen eines IP-Fernsehprogramms an potentielle Zuschauer.

Im Stand der Technik existieren Geräte für den Fernsehempfang, die einen hybriden Medienzugang aufweisen. Einerseits werden damit DVB-Fernsehprogramme über konventionelle Übertragungswege (Kabel, Satellit, terrestrischer Funk) empfangen. Zusätzlich dazu kann mit einem solchen Gerät auf interaktive Medien über einen Zugang zum Internet zugegriffen werden. Das Zusammenspiel dieser beiden Übertragungswege ist im ETSI Standard TS102 796 mit dem Titel "Hybrid broadcast broadband TV" (HbbTV) standardisiert.

Für die Anbieter von WebTV Streaming Angeboten und interaktiven Zusatzdiensten eröffnet sich durch HbbTV eine kostengünstige Möglichkeit, ihre Angebote auf dem besten und größten Bildschirm im Haushalt, den Fernsehbildschirm, zu bringen. Die Anbieter von solchen internetgestützten Angeboten haben zwei Möglichkeiten, ihr Angebot mit HbbTV zum Fernsehzuschauer zu bringen:

Zum einen kann dies über ein gerätespezifisches Portal der HbbTV-Empfangsgeräte erfolgen, zum anderen über die RedButton-Funktionalität (broadcast-related autostart application) in Kooperation mit einem anbietenden Fernsehsender auf HbbTV fähigen Empfangsgeräten. Beide Wege sind mit erheblichen Hürden für den Anbieter und für den Zuschauer versehen.

Der Weg über ein gerätespezifisches Portal bringt die Anbieter in die Abhängigkeit der Hersteller der hybriden Empfangsgeräte, da nur die Hersteller einen technischen Zugriff und somit Einfluss auf die Ausgestaltung des Portals und deren Inhalte ausüben und die Hersteller zum Teil bewusst technische Beschränkungen einführen. Die Ausgestaltung der Portale variiert zudem von Hersteller zu Hersteller, so dass ein Anbieter sein WebTV-Angebot und die nötigen Schnittstellen auf diese verschiedenen Ausgestaltungen jeweils anpassen müsste.

Bei dem Weg über die RedButton-Funktionalität sind die Anbieter auf die Zusammenarbeit mit einem bestehenden Fernseh- oder Radiosender angewiesen, der sein Video-/Audio-Programm über die konventionellen Übertragungswege verteilt. Das WebTV ist dann an den jeweiligen Fernseh- oder Radiosender gekoppelt und auch der Benutzer muss, um diese zu entkoppeln, zusätzliche Schritte (z. B. das Drücken des roten Knopfs auf der Fernbedienung) gegenüber normalen Fernsehgewohnheiten durchführen, um von dem Fernseh- oder Radiosender zu dem WebTV-Angebot zu gelangen.

Aufgabe der vorliegenden Erfindung ist es, den Anbietern von WebTV-Angeboten das Bereitstellen Ihrer Angebote für potentielle Zuschauer zu erleichtern. Den Zuschauern soll der Zugriff auf diese Angebote erleichtert werden. Die Aufgabe wird durch die unabhängigen Ansprüche gelöst. Vorteilhafte Weiterbildungen sind in den Unteransprüchen definiert.

Insbesondere wird die Aufgabe gelöst durch ein Verfahren zum Bereitstellen eines IP-Fernsehprogramms (10) für potentielle Zuschauer (40), umfassend die folgenden Schritte:
- Bereitstellen einer über eine Bewegtbild-URL (21) und ein paketvermitteltes Netzwerk (30) erreichbaren Zugriffsmöglichkeit auf das IP-Fernsehprogramm (10);
- Beschreiben mindestens einer Application Information Table AIT (51) mit Zugriffsdaten (52) für den Zugriff auf das IP-Fernsehprogramm (10);
- Übermitteln der beschriebenen AIT (51) zu potentiellen Zuschauern (40) als Teil mindestens eines DVB-Transportstroms (61) auf einem konventionellen Übertragungsweg (70).

Das bereitgestellte IP-Fernsehprogramm bzw. WebTV ist bevorzugt ein Fernsehprogramm, welches über ein paketvermitteltes Netzwerk zu den Zuschauern übertragen wird. Das Fernsehprogramm ist dabei eine Abfolge von Sendebeiträgen (Nachrichtensendung, Dokumentarfilm, Werbeeinblendung, Talk Show etc.), die zusammengenommen ein ausstrahlbares Fernsehprogramm ergeben. Bevorzugt sind die Inhalte, aus denen sich das Fernsehprogramm zusammensetzt, durch Uhrzeit und/oder Datum bestimmt. Physikalisch besteht das Fernsehprogramm bevorzugt aus mindestens einem digitalen Videosignal und bevorzugt mindestens einem digitalen Audiosignal. Das IP-Fernsehprogramm wird bevorzugt linear durch seinen Anbieter über das paketvermittelte Netzwerk bereitgestellt, d.h. zu einer bevorzugt nach Datum und/oder Uhrzeit festgesetzten Zeit ist ein bestimmter Inhalt bzw. Sendebeitrag abrufbar. Bevorzugt ist das IP-Fernsehprogramm interaktiv. Ein Zuschauer kann z.B. durch Kommandos, die über das IP-vermittelte Netzwerk an die Quelle des IP-Fernsehprogramms gesendet werden, zwischen einer oder mehrere der folgenden Aktionen wählen: Zurückspulen, Vorspulen, Abspielen in erhöhter oder verminderter Geschwindigkeit, Abrufen eines EPG (electronic program guide), Öffnen von Zusatzfenstern und/oder Bild-in-Bild Informationen, Abrufen und Anzeigen von Internet-Inhalten als Overlay.

Bevorzugt ist unter IP-Fernsehprogramm genauso ein IP-Radioprogramm, z.B. ein Internetradio, zu verstehen.

Potentielle Zuschauer sind bevorzugt Benutzer eines Hybrid-TV-Empfangsgerätes, die durch eine bestimmte Benutzereingabe das bereitgestellte IP-Fernsehprogramm empfangen und sich anzeigen lassen können.

Unter Bereitstellen eines IP-Fernsehprogramms versteht man bevorzugt das Anbieten einer Zugriffsmöglichkeit auf das IP-Fernsehprogramm an potentielle Zuschauer.

Eine Bewegtbild-URL ist bevorzugt eine Verknüpfung, bevorzugt Internet-Verknüpfung, zu einer Videodatenquelle. Diese Videodatenquelle ist z.B. eine Videodatei (z.B..mov oder .wmv) oder zu einem Stream (z.B. «mms://... oder «rtsp://...»). Im Falle der Bereitstellung eines IP-Radioprogramms wäre die Bewegtbild-URL bevorzugt eine Audio-URL, die zu einer Audio-Signalquelle wie z.B. einer Audiodatei oder einem Audio-Stream führt.

Das paketvermittelte Netzwerk ist bevorzugt das Internet oder auch nur ein Teil des Internets, wie z.B. das Netzwerk eines ISP (Internet Service Provider).

Das Bereitstellen einer über das paketvermittelte Netzwerk erreichbaren Zugriffsmöglichkeit auf das IP-Fernsehprogramm ist z.B. das Speichern der Audio- und/oder Video-Daten auf einem Webserver bzw. Streaming-Server und die Einrichtung der nötigen Zugriffsrechte und/oder Portweiterleitungen. Wenn ein Netzwerkgerät die Bewegtbild-URL aufruft, werden die mit dieser URL verknüpften Audio- und/oder Video-Daten zu diesem Netzwerkgerät über das paketvermittelte Netzwerk gesendet.

Die AIT ist bevorzugt eine Tabelle zum Signalisieren von Zusatzangeboten zu einem DVB (digital video broadcast)-Kanal. Diese ist bevorzugt gemäß dem HbbTV Standard spezifiziert und implementiert.

Zugriffsdaten sind bevorzugt digitale Daten, die dem Empfänger die Information mitteilen, wie und wo auf das IP-Fernsehprogramm über das IP-vermittelte Netzwerk zugegriffen werden kann. Zum Beispiel fällt hierunter eine URL oder Bewegtbild-URL auf das IP-Fernsehprogramm oder ein Programm (z. B. JAVA®-script) oder eine HTML-Seite, die auf das IP-Fernsehprogramm verlinkt sind. Bevorzugt beinhalten die Zugriffsdaten auf dem Fernsehgerät darstellbare Anweisungen an den Zuschauer, z. B. Drücken einer bestimmten Taste der Fernbedienung (z. B. die rote Taste), um ein Web-TV-Angebot wahrzunehmen.

Durch das Beschreiben der AIT mit den Zugriffsdaten werden diese Informationen in den Transportbehälter AIT eingebettet. Bevorzugt werden die Zugriffsdaten in viele aufeinanderfolgende AITs eingebettet. Die Zugriffsdaten in jeder AIT sind zueinander identisch, sofern der Ort und die Art des Zugriffs auf das IP-Fernsehprogramm konstant sind. Ein DVB-Strom enthält bislang drei Komponenten: SI-Daten, Broadcast-Komponente (Video- und/oder Audio-Daten) und gemäß HbbTV Standard die broadcast related autostart application, sofern vorhanden. Bevorzugt werden Video- und/oder Audio-Daten gemäß der Erfindung nicht in den Transportstrom eingebettet. Eine broadcast related Applikation hat das Ziel, den Fernsehzuschauer direkt nach einem Servicewechsel oder nach einer erneuten Signalisierung innerhalb eines Services einen interaktiven Zusatzdienst anzubieten. Diese Applikationen werden oft als "red button"-Applikation bezeichnet oder als die "red button"-Funktionalität, da diese gewöhnlich dem Nutzer einen Hinweis anzeigen, für weitere Informationen zum laufenden Programm den roten Knopf der Fernbedienung zu betätigen. Als broadcast related application ist diese Applikation einem Fernseh- oder Radiosender zugeordnet.

Ein konventioneller Übertragungsweg ist z.B. ein Element oder eine Kombination der Elemente aus: terrestrischer Mobil- oder Rundfunk, Kabelübertragung, Satellitenübertragung.

Das Übermitteln der AIT besteht bevorzugt aus einem Einbetten der AIT gemäß dem HbbTV Standard in einen DVB-Transportstrom und das Übermitteln dieses Transportstroms an z.B. einen Übertragungsnetzanbieter zur weiteren Übertragung. Der Einbettung steht bevorzugt gleich, einen DVB-Transportstrom zumindest aus DVB-SI-Daten und der AIT zu erzeugen und dann zu den potentiellen Zuschauern weiterzuleiten. DVB-SI-Daten enthalten bevorzugt die Tabellen PMT (Program Map Table), PAT (Program Association Table), SDT (Service Description Table) und EIT (Event Information Table). Diese Service-Informationen beschreiben einen DVB-Service technisch und inhaltlich und ermöglichen das Auffinden und die Darstellung dieser Services durch die DVB Empfangsgeräte.

Bevorzugt wird die AIT in mehr als einen DVB-Transportstrom eingebettet, womit sich die Verfügbarkeit der Zugriffsdaten für den Zugriff auf das IP-Fernsehprogramm noch weiter erhöht. Zum Beispiel können auf diese Weise lokale Störungen in bestimmten Transpondern ausgegelichen werden, da der Zuschauer die Signalisierung des IP-Fernsehprogramms, d. h. die AIT, auch auf einem anderen, störungsfreien Transponder empfangen kann.

Auf diese Weise stellt ein Web-TV-Anbieter auf eine effektive Weise die Zugriffsinformationen den potentiellen Zuschauern zur Verfügung. Durch das Beschreiben einer AIT können die Zugriffsdaten auf der Seite des Empfängers durch das Empfangsgerät automatisch und in transparenter Weise gemäß dem HbbTV-Standard ausgelesen werden. Der Web-TV Anbieter profitiert dabei durch die über konventionelle Übertragungswege übermittelten DVB-Daten von der Kompatibilität mit den bisherigen Strukturen: der Empfang wird primär über DVB erwartet. Da jedoch lediglich DVB-SI-Tabellen und die AIT übertragen werden müssen - es ist nicht notwendig, Audio- oder Videodaten über DVB zusätzlich zu übertragen - wird nur eine geringe Bandbreite von ca. 0,1 Mbit/s benötigt, um die Zugriffsdaten zu verbreiten. Die eigentlichen Video- und Audioinhalte können dann als IP-Fernseh- oder -Radioprogamm über das Internet oder ein IP-vermitteltes Netzwerk zu dem Zuschauer übermittelt werden. Die über ein paketvermitteltes Netzwerk wie das Internet verwendeten Bandbreitenkosten sind abhängig von der tatsächlichen Nutzung durch Zuschauer und somit in bestimmten Nutzungsszenarien kostengünstiger als die Übertragung von Video- und/oder Audiodateien über einen herkömmlichen Übertragungsweg. Für den Web-TV-Anbieter ist es damit möglich, seine Services über DVB zu signalisieren, da er nur noch einen Bruchteil der ansonsten benötigten, teuren Bandbreite verwenden muss und damit kann er auf einem eigenen Programmplatz seine Zugriffsdaten über die AIT-Tabelle senden. Er ist damit unabhängig von einem gerätespezifischen Portal, das seine Services aufnimmt, sowie auch von einem großen Fernseh- oder Radiosender, der seine Services nur als Nebenprodukt zusätzlich zu seinem eigenen Hauptservice anbieten würde. Der Web-TV-Anbieter kann seinen Service damit als Hauptservice auf einem eigenen Programmplatz aussenden.

Bevorzugt wird über die DVB-SI-Daten und die IP broadcast related autostart application ein Programmplatz zugewiesen, den ein Web-TV-Anbieter dann mit dem Fernsehprogramm, das über das paketvermittelte Netzwerk und nicht über den konventionellen Übertragungsweg zu dem Zuschauer übermittelt wird, ausgefüllt wird. Dieses Fernsehprogramm ist durch den Sendersuchlauf eines DVB-Empfangsgeräts auffindbar und einem Programmplatz zuweisbar. Sollte das Empfangsgerät keine Hybridfunktionalität wie z. B. durch den HbbTV-Standard gegeben aufweisen, wird dem Zuschauer ein Hinweis angezeigt, wie er das Web-TV-Angebot bzw. IP-Fernsehprogramm empfangen könnte. Hierzu wird zusätzlich zur AIT eine Nachricht, bevorzugt durch eine Übermittlungseinheit, in den DVB-Strom eingebettet und bevorzugt durch DVB-SI signalisiert. Diese Nachricht ist z. B. ein Standbild, das wegen der hohen möglichen Kompressionrate wenig Bandbreite im Transportstream belegt.

Der HbbTV Standard wurde erstellt, um Fernsehprogramme, die über die herkömmlichen Übertragungswege zu den Zuschauern übermittelt werden, durch interaktive Services zu ergänzen, wie z.B. einem interaktiven Programmplan, der über das Internet dem jeweiligen gerade über DVB empfangenen Programm zugeordnet ist. Durch diese hier vorgestellte Erfindung wird mittels des HbbTV-Standards nicht eine Ergänzung des über DVB gesendeten Fernsehprogramms vorgenommen, sondern das über DVB gesendete Fernsehprogramm wird durch ein über ein paketvermitteltes Netzwerk übermitteltes IP-Fernsehprogramm ersetzt, wobei der Benutzer eine Zugriffsmöglichkeit auf dieses IP-Fernsehprogramm erhält, die über konventionelle Übertragungswege verbreitet werden kann und somit auch auf konventionellem Wege empfangen werden kann. Dadurch, dass die AIT eine Applikationsinformation des Web-TV-Anbieters ist, kann er technisch und inhaltlich bestimmen, ob und wenn mit welchem Inhalt diese AIT gesendet wird.

Bevorzugt wird nicht nur ein Web-TV-Angebot sondern überhaupt ein Angebot von interaktiven Informationen (z. B. eine Tagesszeitung mit dem entsprechenden Internetangebot) auf diese Weise über das Fernsehgerät signalisiert. Das IP-Fernsehprogramm ist dann nicht ein Fernsehprogramm im eigentlichen Sinne von bewegten Bildern mit Ton und Sendebeiträgen, sondern das Internetangebot z. B. der Tagesszeitung. Diesem wird ein eigener Programmplatz im DVB-Strom zugewiesen und somit öffnet sich für den Zuschauer, wenn er diesen Programmplatz wählt, das Internetangebot der Tagesszeitung. Der Anbieter der Tageszeitung ist dabei unabhängig von einem Fernseh- oder Radiosender und unabhängig von einem gerätespezifischen Portal.

Ein weiteres erfindungsgemäßes Verfahren umfasst zusätzlichden Schritt:
- Übermitteln von ergänzenden Zugriffsdaten (52.1) in einem Daten-Karussell (52.2), bevorzugt in einem DSM-CC (digital storage media command and control) Daten-Karussell, als Teil des mindestens einen DVB-Transportstroms (61) auf einem konventionellen Übertragungsweg (70).

Durch das Übermitteln von ergänzenden Zugriffsdaten zusätzlich zu den Zugriffsdaten werden die für die Signalisierung notwendigen Informationen aufgeteilt. Größere Datenmengen werden dann bevorzugt in das Datenkarussell geschrieben als in die AIT.

Gemäß einer weiteren Ausführungsform der vorliegenden Erfindung enthalten die ergänzenden Zugriffsdaten (52.1)
- eine CE-HTML-Seite (53).

Eine CE-HTML-Seite ist bevorzugt eine mittels CE-HTMLprogrammierte Seite. Diese enthält z.B. die Bewegtbild-URL, die per programmiertem Automatismus, z.B. über JAVA®-Script aufgerufen wird, nachdem die CE-HTML-Seite in einem Browser aufgerufen wurde. Bevorzugt enthält die CE-HTML-Seite ein Video-Objekt, wie z.B. einen Mediaplayer oder einen Objekt, das ein Mediaplayer-Plugin oder einen im Browser integrierten Mediaplayer aufruft. Die CE-HTML-Seite führt bevorzugt die automatische und bildschirmfüllende Darstellung des dann aufgerufenen IP-Fernsehprogramms durch. Die CE-HTML-Seite ist auf einem über das paketvermittelte Netzwerk erreichbaren Server gespeichert, bevorzugt wird sie im DVB-Strom wiederholt übermittelt. Für Hybrid-Geräte, die nicht an IP bzw. Internet angeschlossen sind, werden bevorzugt durch die Übermittlung einer CE-HTML-Seite im DSMCC-Datenkarussell Informationen für und/oder Anweisungen an den Zuschauer versandt, wie z. B. die Aufforderung zum Anschließen des Hybrid-Gerätes an ein IP-Netz.

Durch die Übermittlung einer CE-HTML-Seite als ergänzende Zugriffsdaten wird die CE-HTML-Seite über den konventionellen Übertragungsweg übermittelt. Dies kann in Fällen vorteilhaft sein, in denen die response-Zeit über das Internet größer ist als die für den Zugriff auf das Datenkarussell. Wenn z.B. das IP-Fernsehprogramm auf einem anderen Streaming-Server gespeichert ist als die CE-HTML-Webseite, diese aber auch auf einem Webserver vorliegt, muss zum einen ein IP-Request von dem Empfangsgerät zum Webserver durchgeführt werden sowie ein Request vom Webserver zum Streaming-Server. Diese Kaskade kann in manchen Fällen zu langen response-Zeiten führen, so dass hier das Abrufen der CE-HTML-Seite aus dem DVB-Strom eine kürzere Verzögerung verursacht.

Gemäß einer weiteren Ausführungsform der vorliegenden Erfindung enthalten die Zugriffsdaten (52)
- die Bewegtbild-URL (21) und/oder
- eine CE-HTML-Seite (53) und/oder
- eine URL (54), welche eine CE-HTML-Seite (53) adressiert, wobei die CE-HTML-Seite (53) auf einem über das paketvermittelte Netzwerk erreichbaren Server (55,20), bevorzugt dem

Streaming-Server (20), gespeichert ist oder Bestandteil der ergänzenden Zugriffsdaten (52.1) ist.

Bevorzugt wird die Bewegtbild-URL in die AIT direkt geschrieben. Auf der Seite des Empfängers wird die AIT dann ausgelesen und die Bewegtbild-URL aufgerufen. Das IP-Fernsehprogramm wird dann geladen und auf dem Empfangsgerät des Zuschauers dargestellt.

Wenn die Zugriffsdaten eine URL enthalten, die auf eine CE-HTML-Seite verweist, ist diese durch das Empfangsgerät des Zuschauers auslesbar, wodurch der Zuschauer auf die CE-HTML-Seite geleitet wird. Die CE-HTML-Seite kann entweder schon im DVB-Stream als Bestandteil der ergänzenden Zugriffsdaten mitgesendet worden sein. Dann weist die URL z. B. folgendes Muster auf «dvb://1.423.12» oder die CE-HTML-Seite wird über das paketvermittelte Netzwerk geladen. Sodann erfolgt das automatische Abrufen der Bewegtbild-URL, die bevorzugt in der CE-HTML-Seite gespeichert ist, und Video- und/oder Audiodaten werden dem Zuschauer angezeigt.

In einem weiteren erfindungsgemäßen Verfahren werden die Zugriffsdaten (52) innerhalb der mindestens einen AIT (51) als automatisch zu startende Anwendung gekennzeichnet.

Bevorzugt sind die Zugriffsdaten hierfür mit dem control_code AUTOSTART signalisiert. Wenn die Zugriffsdaten z.B. eine URL sind, wird das Empfangsgerät des Zuschauers automatisch diese URL über einen Browser laden. Bevorzugt wird daraufhin die initiale CE-HTML-Seite geladen, über das IP-vermittelte Netzwerk und/oder auch über DSM-CC aus dem DVB-Strom. Bevorzugt ist die CE-HTML-Seite derart programmiert, dass zum Einen die Bewegtbild-URL automatisch nach dem Laden der CE-HTML-Seite aufgerufen wird und die entsprechenden Video- und Audiodaten über das paketvermittelte Netzwerk empfangen und bildschirmfüllend angezeigt werden. Hierdurch und durch die Kombination der Kennzeichnung der Zugriffsdaten als autostart application erhält der Fernsehzuschauer den Eindruck eines normalen Programmwechsels, wenn er von einem herkömmlichen DVB-Fernsehrogramm auf den Programmplatz des nach diesem Verfahren signalisierten Web-TVs wechselt. Das IP-Fernsehprogramm wird somit im Ergebnis automatisch beim Programmwechsel auf diesen Programmplatz gestartet. Damit unterscheidet sich das Handling dieses WebTV-Kanals für den Zuschauer nicht von dem eines anderen digitalen Fernseh- oder Radiosenders, der über herkömmliche Weise mit DVB übertragen wird. Ohne sich mit dem Aufrufen von Portalen oder Zusatzdiensten für HbbTV vertraut machen zu müssen, kann der Zuschauer daher wie gewohnt mit seinem P+/P- auf seiner TV-Fernbedienung durch die Fernsehsender oder auch WebTV-Sender zappen. Durch dieses Verfahren wird ein WebTV-Stream dann sofort nach dem Senderwechsel bildschirmfüllend angezeigt, wie bei einem normalen TV-Sender. Bislang startet ein interaktiver Service immer erst, wenn der Zuschauer ein via DVB signalisiertes vollständiges Fernsehprogramm betrachtet. Durch das erfindungsgemäße Verfahren wird diese Schrittfolge, die immer zunächst das Anschauen des über DVB übertragenen Audio- oder Videoinhalts beinhaltet, aufgehoben. Stattdessen wird sofort eine autostart-application gestartet, die dann jedoch einen über ein paketvermitteltes Netzwerk übermittelten IP-Fernsehstrom abruft und bildschirmfüllend anzeigt. Alternativ weist die CE-HTML-Seite auf die vorhandenen Möglichkeiten des Angebots des Web-TV-Anbieters hin und beinhaltet einen Hinweis, durch Drücken bestimmter Tasten (z. B. die rote Taste) bestimmte Aktionen (z. B. das Starten der Wiedergabe des IP-Fernsehprogramms) auszulösen. Der Nutzer kann somit bestimmen, ob eine Verbindung zum Internet gewünscht ist oder nicht, was unter anderem bei manchen Internetabonnements (z. B. Volumentarife) von Interesse ist.

In einem weiteren erfindungsgemäßen Verfahren erfolgt das Übermitteln der mindestens einen AIT (51) wiederholt und/oder in mindestens einer Program Map Table PMT.

Durch die wiederholte Übermittlung der AIT muss das Empfangsgerät des Zuschauers die AIT Information nicht zwingend in einem nicht flüchtigen Speicher vorhalten, sondern kann diese auch wiederholt auslesen und so immer die aktuell gültigen Zugriffsdaten erhalten. Falls sich die Zugriffsdaten z.B. wegen eines Austausches eines Servers oder einer neu gekauften Internet-Domain zwischenzeitlich ändern, bleibt dies vom Zuschauer unbemerkt. Bevorzugt werden auch die ergänzenden Zugriffsdaten wiederholt übermittelt. Bevorzugt wird die Ausspielbitrate für die AIT dynamisch auf den Nutzungskontext und/oder die Reaktionszeit auf Veränderungen der Zugriffsdaten und/oder auf die Zugriffsverzögerung auf Seite des Empfängers angepasst. Die AIT wird bevorzugt mit einer PMT verknüpft. Auf diese Weise wird auf der Seite des Empfängers dynamisch bei der Auswertung der PMT die AIT erkannt.

Gemäß einer weiteren Ausführungsform der vorliegenden Erfindung ist die Bewegtbild-URL (21) statischer Bestandteil der Zugriffsdaten (52) und/oder der ergänzenden Zugriffsdaten (52.1) oder dynamisch bestimmbar, bevorzugt mittels JA-VA®-script bestimmbar, wobei das JAVA®-script Bestandteil der Zugriffsdaten (52) und/oder der ergänzenden Zugriffsdaten (52.1) ist.

Statischer Bestandteil ist die Bewegtbild-URL z.B., wenn sie als Klartext vorliegt. Bevorzugt liest das JAVA®-script von einem Server die gerade gültige Bewegtbild-URL aus.

Gemäß einer weiteren Ausführungsform der vorliegenden Erfindung sind die verwendeten CE-HTML-Seiten (53) durch einen in einem Empfangsgerät (41) eines potentiellen Zuschauers (40) integrierten Browser abrufbar und/oder darstellbar.

Die CE-HTML-Seite ist daher bevorzugt gemäß den Spezifikationen des HbbTV-Standards programmiert, so dass ein Browser, der gemäß HbbTV-Spezifikation im Empfangsgerät des Zuschauers bereits ab Werk integriert ist, diese CE-HTML-Seite ohne Fehler aufrufen wird.

Ein weiteres erfindungsgemäßes Verfahren umfasst zusätzlich den Schritt:
- Übermitteln des IP-Fernsehprogramms (10) zu mindestens einem Zuschauer (40) über das paketvermittelte Netzwerk.

Bevorzugt wird zu dem mindestens einen Zuschauer eine Unicast-IP-Verbindung hergestellt, über welche die Audio- und/oder Videodaten für das IP-Fernsehprogramm gesendet werden. Besonders bevorzugt werden Anfragen von mehreren Zuschauern zum Empfangen des IP-Fernsehprogramms zusammengefasst und zu diesen wird eine Multicast-Verbindung aufgebaut. Ganz besonders bevorzugt erfolgt das Übermitteln des IP-Fernsehprogramms über einen IP-Broadcast. Auf diese Weise kann die benutzte Bandbreite mit Hilfe der verschiedenen Übertragungstypen je nach erwartetem Zuschaueraufkommen optimiert werden.

In einem weiteren erfindungsgemäßen Verfahren erfolgt das Übermitteln des IP-Fernsehprogramms (10) über ein Videoobjekt, das Bestandteil der Zugriffsdaten (52) oder der ergänzenden Zugriffsdaten (52.1) ist oder das auf einem über das paketvermittelte Netzwerk erreichbaren Server (20, 55) vorliegt.

Das Video-Objekt ist bevorzugt ein im Browser integrierter Mediaplayer oder ein Plug-in des Browsers zum Aufruf eines im dem Empfangsgerät des Zuschauers enthaltenen Mediaplayers. Besonders bevorzugt ist das Video-Objekt an sich ein Mediaplayer, dessen Programmgröße so gering und optimiert ist, dass er zusammen mit der CE-HTML-Webseite sowohl über das DVB - oder über das paketvermittelte Netzwerk ohne lange Ladezeiten übermittelt wird. Auf dem über das paketvermittelte Netzwerk erreichbaren Server liegt das Videoobjekt bevorzugt eingebettet in einer HTML-Seite vor.

In einem weiteren erfindungsgemäßen Verfahren ruft das Video-Objekt die Bewegtbild-URL (21) auf.

Bevorzugt ist das Videoobjekt eingerichtet, das IP-Fernsehprogramm selbstständig aufzurufen und automatisch dessen Daten als Vollbild dem Zuschauer anzuzeigen. Durch die Verwendung eines Video-Objekts kann ein WebTV-Anbieter damit festlegen, auf welche Weise die Bewegtbilder oder die Audio-daten bei dem Zuschauer angezeigt bzw. abgespielt werden sollen.

Die Aufgabe wird weiterhin insbesondere gelöst durch eine Vorrichtung zum Bereitstellen eines IP-Fernsehprogramms (10) für potentielle Zuschauer (40), umfassend:
- einen über eine Bewegtbild-URL (21) und ein paketvermitteltes Netzwerk (30) erreichbaren Streaming-Server (20), welcher eine Datenquelle (22) aufweist, aus der das IP-Fernsehprogramm (10) auslesbar ist;
- eine Signalisierungseinrichtung (50), mittels welcher mindestens eine Application Information Table AIT (51) mit Zugriffsdaten (52) für den Zugriff auf das IP-Fernsehprogramm (10) beschreibbar ist.
- eine Übermittlungseinrichtung (60), welche eingerichtet ist, die mindestens eine AIT (51) als Teil mindestens eines DVB-Transportstroms (61) auf einem konventionellen Übertragungsweg (70) zu potentiellen Zuschauern (40) zu übermitteln.

Von dem Streaming-Server werden bevorzugt die Audio- und/oder Videodaten zu dem Zuschauer gesendet. Der Streaming-Server ist bevorzugt kombiniert mit einem Webserver, auf dem eine CE-HTML-Seite abgelegt ist, die durch den Browser des HbbTV Empfangsgerätes abrufbar ist.

Eine Datenquelle ist z.B. eine Festplatte, ein Flash-Speicher oder ein über Netzwerk oder Internet erreichbarer Speicher oder auch nur eine Stream-URL, die, sobald man diese abruft, einen Stream sendet.

Die Signalisierungseinrichtung ist bevorzugt ein Softwaremodul, das im Sendesystem des WebTV-Anbieters integriert ist. Zusammen mit der Übermittlungseinrichtung, die auch bevorzugt ein Softwaremodul ist, wird ein DVB-System gebildet, welches einen gülten DVB-Stream erstellt bzw. eingerichtet ist, einen gültigen DVB-Stream zu erstellen, wobei besonders bevorzugt der DVB-Stream lediglich aus DVB-SI-Daten sowie einer AIT generiert wird bzw. generierbar ist.

In einer weiteren erfindungsgemäßen Vorrichtung ist die Übermittlungseinrichtung (60) zusätzlich eingerichtet, ergänzende Zugriffsdaten (52.1) in einem Daten-Karussell (52.2) als Teil des mindestens einen DVB-Transportstroms (61) auf einem konventionellen Übertragungsweg (70) zu übermitteln.

In einer weiteren erfindungsgemäßen Vorrichtung ist die Übermittlungseinrichtung (60) eingerichtet, die AIT (51) wiederholt und/oder in mindestens einer Program Map Table (PMT) zu übermitteln.

Die Erfindung soll nun anhand von Zeichnungen beispielhaft weiter veranschaulicht werden. Hierbei zeigen:
- Figur 1: eine schematische Darstellung der erfindungsgemäßen Vorrichtung und des erfindungsgemäßen Verfahrens, wobei optional das Vorhandensein von ergänzenden Zugriffsdaten dargestellt ist,
- Figur 2: eine Darstellung ähnlich der zu Figur 1, wobei eine CE-HTML-Seite auf einem über das paketvermittelte Netzwerk erreichbaren Server gespeichert ist,
- Figur 3: eine schematische Darstellung der Netzebenen des konventionellen Übertragungswegs und die Zuordnung der erfindungsgemäßen Vorrichtung und des erfindungsgemäßen Verfahrens dazu.

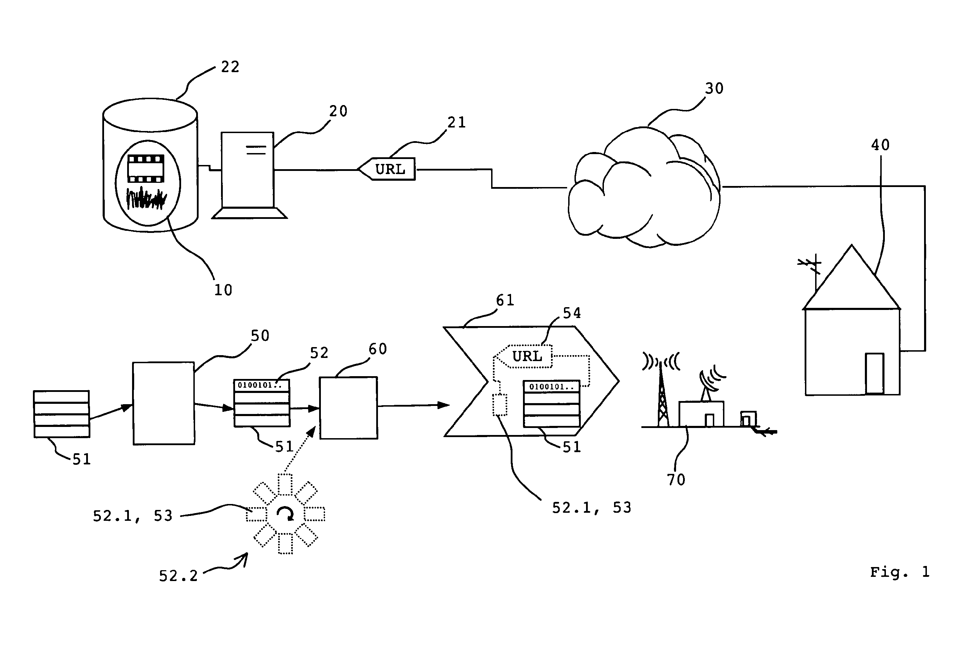

**Figur 1** zeigt eine schematische Darstellung der erfindungsgemäßen Vorrichtung und des erfindungsgemäßen Verfahrens, wobei optional das Vorhandensein von ergänzenden Zugriffsdaten 52.1 dargestellt ist. Diese Option eines DSM-CC Datenkarussells 52.2 ist gepunktet angedeutet. Ein potentieller Zuschauer 40 ist über ein paketvermitteltes Netzwerk 30 verbunden und ihm steht der Weg offen, über eine Bewegtbild-URL ein Fernsehprogramm 10 von einem Streaming-Server 20 abzurufen. Das Fernsehprogramm 10 liegt auf einer Datenquelle 22 des Streaming-Servers 20 vor. Ein von einem WebTV-Anbieter generierter DVB-Transportstrom 61 ist über einen Übertragungsweg 70 konventionell zum Zuschauer 40 übermittelbar. Eine Signalisierungseinrichtung 50 schreibt hierfür Zugriffsdaten 52 in eine AIT 51 und diese AIT ist dann durch eine Übermittlungseinrichtung 60 in den DVB-Transportstrom 61 integrierbar.

In diesem Beispiel sind die Zugriffsdaten 52 die Bewegtbild-URL 21 selbst. Diese werden in die AIT 51 durch die Signalisierungseinrichtung 50 geschrieben und die Übermittlungseinrichtung 60 schreibt die AIT 51 in einen DVB-Transportstrom 61. Dieser wird über terrestrischen Funk zum potentiellen Zuschauer 40 übermittelt. Wenn der potentielle Zuschauer 40 auf den Kanal (bzw. Programmplatz oder ein Transponder-Äquivalent) wechselt, dem das WebTV-Angebot zugeordnet ist, werden auf der Seite des Zuschauers 40 folgende Schritte durchgeführt, die bevorzugt selbst ein erfindungsgemäßes Verfahren zum Empfangen eines IP-Fernsehprogramms darstellen, parallel zu dem in den Ansprüchen genannten Verfahren zum Bereitstellen eines IP-Fernsehprogramms:
- Auslesen der AIT 51 aus dem DVB-Strom 61;
- Auslesen der Zugriffsdaten 52, die bevorzugt in diesem Fall die Bewegtbild-URL 21 selbst sind;
- Aufrufen der Bewegtbild-URL 21 über das paketvermittelte Netzwerk 30;
- Empfangen und Anzeigen des IP-Fernsehprogramms 10 auf dem dafür vorgesehenen Anzeigegerät.

Auf dem Streaming-Server 20 wird nach einem Aufruf durch die Bewegtbild-URL 21 auf die Datenquelle 22 zugegriffen und das IP-Fersehprogramm 10 wird an den Absender der Zugriffsanfrage, also an den Zuschauer 40 versendet.

Auf diese Weise wird eine Signalisierung eines WebTV-Angebots realisiert, welche auf der Seite des Zuschauers 40 keine spezielle Programmierung (z. B. per MHP) erforderlich macht, da die bereits vorhandenen Mechanismen z. B. des HbbTV Standards ausgenutzt werden. Bandbreitenintensive Daten-, Audio- oder Videoströme werden nicht über das DVB-Netz, als konventioneller Übertragungsweg 70, gebroadcastet, sondern online über das Internet 30 geliefert und sodann z.B. als autostart-Applikation auf dem Empfangsgerät bildschirmfüllend angezeigt. Nur die DVB-SI-Daten und die für die HbbTV autostart-Applikation notwendige AIT 51 des DVB-Services müssen über das DVB-Netz gebroadcastet werden. Damit fällt ein Großteil der über das DVB-Netz zu vermittelnden Daten weg. Es kann auf diese Weise z.B. ein internetgestütztes, auf der HbbTV-Technologie basierendes Angebot auf einem eigenen DVBTV-Service als eine broadcast related autostart application signalisiert werden. Zudem ist die Bedienung für den Zuschauer 40 identisch zu der eines normalen DVB-Fernsehprogramms. Er kann wie gewohnt auf das IP-Fernsehprogramm schalten und es auch wieder verlassen. Durch Übertragung zusätzlicher interaktiver Inhalte über das Internet 30, stehen zudem interaktive Dienste ebenso für diesen DVB-Programmplatz zur Verfügung wie das IP-Fernsehprogramm.

Wenn die Option eines Datenkarussells 52.2 realisiert ist, wird mit Hilfe dieses Datenkarussells 52.2 eine CE-HTML-Seite 53 in den DVB-Transportstream 61 mit eingebettet. Jedes Datenpaket des Datenkarussells 52.2 enthält dabei entweder einmal komplett die CE-HTML-Seite 53, sofern die Größe des Datenpakets und der Webseite dies erlauben oder die CE-HTML-Webseite 53 wird auf mehrere Datenpakete des Datenkarussells 52.2 aufgeteilt. Die Datenpakete des Datenkarussells 52.2 sind dann die zusätzlichen Zugriffsdaten 52.1 und werden zyklisch immer wieder in den DVB-Transportstream 61 eingebettet. Auch die AIT 51 wird wiederholt in den Transportstream 61 eingebettet. Die Zugriffsdaten 52 in der AIT 51 enthalten eine URL 54 zu der durch das Datenkarussell 52.2 übermittelten CE-HTML-Webseite 53 und sind als autostart application signalisiert. Nachdem das Empfangsgerät des Zuschauers 40 wiederum die AIT 51 aus dem Transportstream 61 ausgelesen hat, werden folgende Schritte durchgeführt:
- Auslesen der URL 54 aus der AIT;
- Aufrufen der CE-HTML-Seite 53 aus dem Datenkarussell 52.2;
- Ausführen von JAVA®-script-Code, welcher in der CE-HTML-Seite 53 integriert ist und die gleichermaßen integrierte Bewegtbild-URL 21 über das paketvermittelte Netzwerk 30 aufruft.

Die dann folgenden Schritte entsprechen denen der Variante ohne Datenkarussell 52.2.

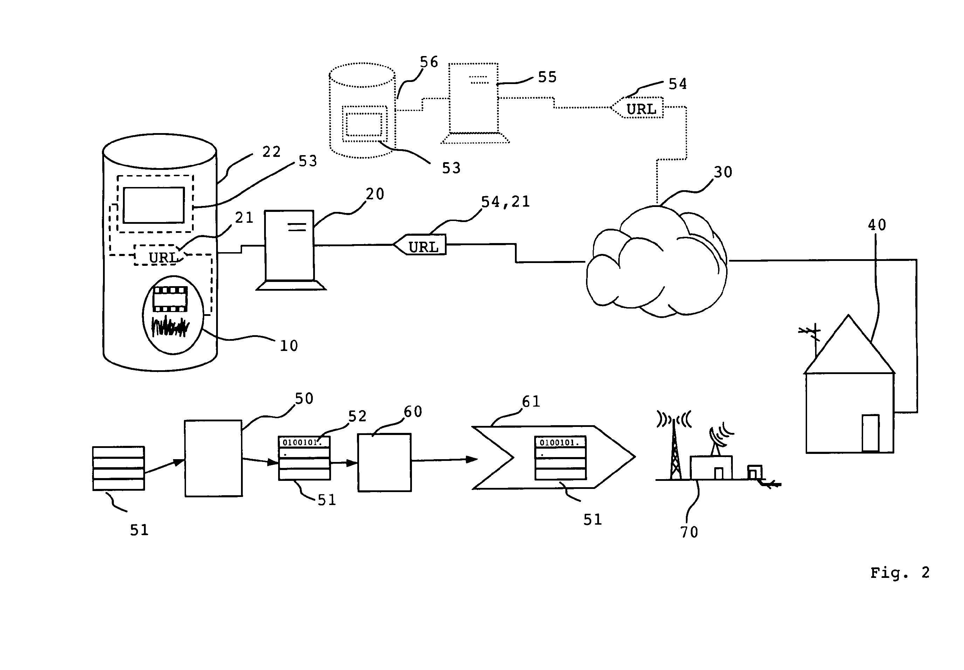

**Figur 2** zeigt eine Darstellung ähnlich der zu Figur 1, wobei eine CE-HTML-Seite 53 auf einem über das paketvermittelte Netzwerk 30 erreichbaren Server 20, 55 gespeichert ist. Zum Einen ist eine Variante gezeigt, bei der die CE-HTML-Seite 53 auf demselben Stream-Server 20 vorgehalten wird wie auch das IP-Fernsehprogramm 10 (gestrichelt dargestellt). Der Zuschauer 40 greift über die URL 54 zu der CE-HTML-Seite 53 auf diese zu und die CE-HTML-Seite 53 wiederum greift über die Bewegtbild-URL 21 auf das IP-Fernsehprogramm 10 zu. Über diese CE-HTML-Webseite 53 und ein integriertes Video-Objekt empfängt der Zuschauer 40 dann das IP-Fernsehprogramm 10. In der anderen dargestellten Variante (gepunktet gezeichnet) befindet sich die CE-HTML-Seite 53 auf einem örtlich entfernten Webserver 55 in Bezug zum Streaming-Server 20 und die Daten für das IP-Fernsehprogramm 10 sowie die CE-HTML-Seite 53 sind damit voneinander getrennt. Über die Verlinkung des IP-Fernsehprogramms 10 durch die in der Webseite 53 vorhandene Bewegtbild-URL 21 werden die Audio- und/oder Videodaten über die auf dem Server 55 liegende CE-HTML-Webseite 53 zu dem Zuschauer 40 gesendet. In die AIT 51 wird für diese Fälle als Zugriffsdaten 52 eine URL 54 auf die CE-HTML-Webseite 53 geschrieben.

Auf der Seite des Empfängers werden folgende Schritte ausgeführt:

**Schritt 1:** die in der AIT 51 signalisierte service-bound autostart-application wird aufgerufen. Die in der AIT 51 über die URL 54, die Bestandteil der Zugriffsdaten 52 ist, angegebene CE-HTML Seite 53 wird durch den auf dem HbbTV-Empfangsgerät enthaltenen Browser ab/aufgerufen.

Die CE-HTML-Seite 53 befindet sich in dieser Figur auf einem über das paketvermittelte Netzwerk 30 erreichbaren WebServer 20 oder 55, könnte aber auch in einem über DVB-broadcast ausgestrahlten DSM-CC 52.2 sein (Fig. 1).

**Schritt 2:** Der Browser interpretiert den CE-HTML Code der aufgerufenen Seite 53 und führt den in der CE-HTML-Seite 53 enthaltenen JAVA®-script-Code aus. Dieser JAVA®-Script-Code ist in der CE-HTML-Seite 53 (z. B. als Datei) enthalten oder als eigenständige Datei vom WebServer 55 über eine URL innerhalb der CE-HTML-Seite 53 eingebunden.

**Schritt 3:** In der CE-HTML-Seite 53 ist ein Video Objekt, hier ein im Browser integrierter Mediaplayer, durch CE-HTML Tags beschrieben oder es wird durch den JAVA®-script Code erzeugt und/oder verändert.

**Schritt 4:** Dieses Video-Objekt ruft dann entweder eine statische oder eine dynamisch, über JAVA®-script bestimmte, Bewegtbild-URL 21 auf.

**Schritt 5.:** Der Bewegtbildinhalt 10 wird dann durch das Video-Objekt des Browsers dargestellt.

Die Schritte 4 und 5 werden in einer beispielhaften Variante im dynamischen Fall, gesteuert durch den JAVA®-script-Code, mehrfach wiederholt und es wird die Bewegtbild-URL 21 bei Bedarf verändert.

Auf diese Weise ist ein WebTV-Anbieter sehr flexibel in logistischen Fragestellungen. Signalisierung, Webseiten, die als Vermittler dienen sowie die eigentlichen IP-Fernsehdaten können auf diese Weise flexibel verteilt werden je nach Anforderungen des Gesamtsystems.

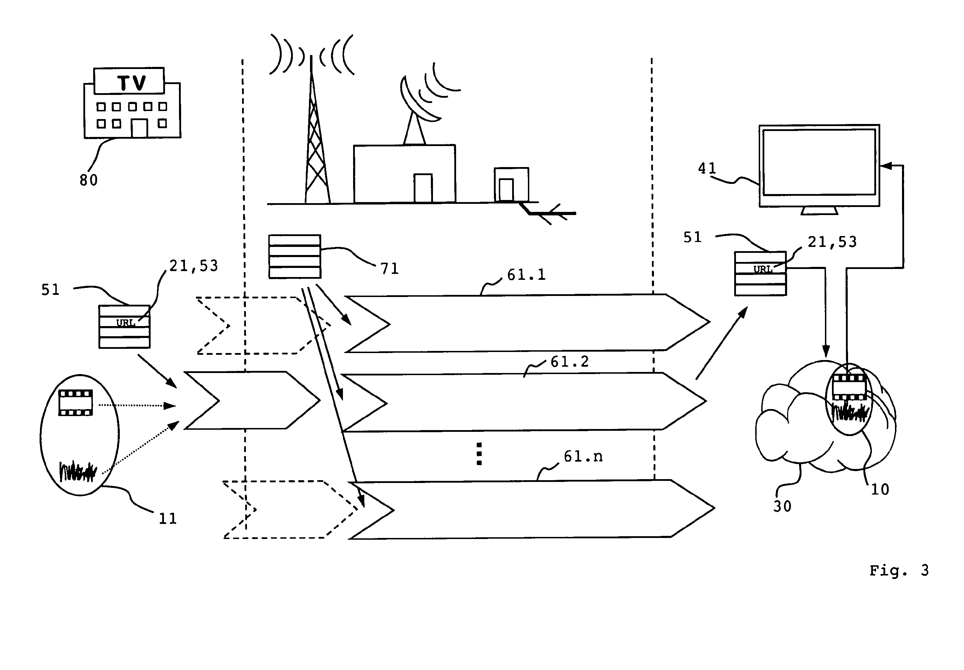

**Figur 3** zeigt eine schematische Darstellung der Netzebenen des konventionellen Übertragungswegs 70 und die Zuordnung der erfindungsgemäßen Vorrichtung und des erfindungsgemäßen Verfahrens dazu.

Im linken Drittel (abgetrennt durch eine vertikale gestrichelte Linie) ist die Ebene des Broadcasters 80, welcher mindestens ein Fernsehprogramm, in diesem Fall nur aus einem Ton- und einem Videostream zusammenstellt und dabei auch eine AIT als Inhalt einer PMT einfügt. Ein solcher Broadcaster 80 ist ein herkömmlicher Broadcaster, der kein IP-Fernsehprogramm 10 sondern ein DVB-Fernsehprogramm 11 aussendet. Daher ist das Einbinden des DVB-Fernsehprogramms 11 in den DVB-Stream 61.2, weil es erfindungsgemäß nicht notwendig ist, auch gepunktet dargestellt. In der AIT 51 werden Anwendungen bzw. Befehle für laufende Anwendungen transportiert. Die AIT 51 wird dynamisch bei der Auswertung der PMT (Programm-Map-Table) erkannt und hat per Spezifikation einen Update und Monitoring Mechanismus, sodass Empfangsgeräte Veränderungen automatisch registrieren. Somit können Veränderungen in der Signalisierung dynamisch durchgeführt werden, ohne dass ein Benutzer aktiv einen Scanvorgang anstossen muss. Zur Steuerung des Lebenszyklus von Applikationen existiert in den HbbTV-Endgeräten der Applikationsmanager, der durch Signalisierungen in der AIT 51 Applikationen startet, pausiert, stoppt, oder sogar löscht. Damit kontrolliert der Broadcaster die Applikationen auf seinen DVB-Services.

Diese Inhalte für den Transportstream 61.2 (z. B. MPEG-TS) werden in diesen durch Multiplexing eingebettet. Bisher werden mindestens der Audio- und Videostream benötigt. Gemäß der vorliegenden Erfindung wird bevorzugt das Einbetten eines Video- und Audiostreams nicht vorgenommen (daher sind auch die Pfeile gepunktet dargestellt). Es werden Zugriffsdaten 52, z. B. direkt eine Bewegtbild-URL 21 oder eine CE-HTML-Seite 53 in die AIT 51 durch den Broadcaster 80 geschrieben. Die Struktur der AIT 51 muss gegenüber dem HbbTV-Standard nicht verändert werden. Die Logik zum Anzeigen des online TV-Signals 10 ist in der Applikation, einer CE-HTML Page 53 mit eigenem JAVA®-script-Code enthalten. Eine initiale CE-HTML-Page 53 kann per DVB-broadcast, d. h. über den Übertragungsweg 70, oder IP-broadband, d. h. über den Weg des Netzwerks 30, aufgerufen werden. Die AIT 51 wird in der PMT (Programm Map Table) des Brodcaster Service vom Broadcaster 80 signalisiert. Die AIT 51 enthält Signalisierungen für Applikationen, die der Sicherheit, den Lebenszyklus der Applikationen, Priorisierung von Applikationen und Metadaten zu Applikationen dienen. Dies dienen z. B. für signierte Applikationen, DVB-Service bound/unbound, Priorisierung von Applikationen sowie Standard Metadaten für Applications, zum Beispiel Applikations-ICONS.

Im mittleren Drittel ist die Infrastrukturebene dargestellt. Verschiedene DVB-Ströme 61.1 bis 61.n werden übertragen. Für jede gewählte Übertragungsart (terrestrisch, über Satellit, über Kabel), werden die spezifischen physikalischen Netzinformationen (z.B. Trägerfrequenzen) durch den jeweiligen Infrastrukturbetreiber in die NIT 71 (network information table) geschrieben und in die Transportströme 61 eingebettet. Die NIT 71 wird beim initialem DVB-Servicescan oder auf Anforderung des Nutzers gelesen. Danach werden die Informationen in der Regel in einem nicht-flüchtigen Speicher bis zum erneuten Scanvorgang statisch im Empfangsgerät abgelegt. Ein Update und Monitoring Mechanismus ist standardmäßig für die NIT 71 nicht vorgesehen.

Die Übertragung einer NIT 71 ist optional. Da die NIT 71 die nötigen Informationen für das Wechseln von einer Frequenz zur nächsten enthält, wird eine NIT 71 durch Endgeräte sehr selten ausgelesen und es wird auf lokal gespeicherte Werte zurückgegriffen, da sonst Wartezeiten beim Zappen entstünden. Die NIT 71 wird daher auch sehr selten übertragen, was wegen der über Wochen oder Monate oder länger gleich bleibenden Informationen in der NIT 71 auch nicht öfter gewünscht wird. Hier ist nur die Einbettung der NIT 71 für ein Übertragungsnetz gezeigt. Ein Broadcaster 80 hat keinen Zugriff auf die NIT 71, denn diese wird erst außerhalb seines Einflussbereiches in den Transportstrom 61 eingebettet.

Im rechten Drittel ist die Ebene des Empfängers bzw. Zuschauers 40 dargestellt. Gemäß der neuen Idee reicht hier ein Auslesen der URL 21 oder der CE-HTML-Seite 53 aus der AIT 51 aus. Das entsprechende Fernsehprogramm 10 wird dann (per CE-HTML Logik und JAVA®-Skript) über das Internet 30 (das aus Platzgründen in dieser Ebene angedeutet ist) erhalten und auf dem Fernsehgerät 41 angezeigt.

Mit dieser Erfindung wird ein innovativer und kosteneffizienter Weg beschrieben, der die Anbieter von WebTV Streaming Angeboten und interaktiven Zusatzdiensten auf HbbTV Empfangsgeräten mit den normalen digitalen DVB TV-Services gleichsetzt und damit die Zugangshürden nicht nur umgeht, sondern den Zugang zu Internet basierten Services aus der Sicht der TV-Zuschauer auf den gelernten Wegen erlaubt. Ohne die Änderung einer Programmierung von Endgeräten wie z. B. durch MHP wird durch das Verfahren ein IP-Fernsehprogramm signalisiert, welches auf einen DVB-Programmplatz gesetzt werden kann. Dafür ist keine dedizierte Hardware des Web-TV Anbieters nötig. Zuschauer erfahren keinen Unterschied zur gewohnten Fernsehhandhabung. Die Anbieter eines IP-Fernsehprogramms profitieren durch die von der tatsächlichen Nutzung durch Zuschauer abhängigen Kosten der Übertragungsbandbreite des Internets. Über das herkömmliche DVB-Netz müssen nur noch minimale Datenvolumen übertragen werden. Nutzungsszenarien mit wenigen Zuschauern aber trotzdem einer weiten geographischen Verbreitung werden durch diese Erfindung erst wirtschaftlich. Ein Serviceanbieter kann seine Kosten mit der tatsächlichen Reichweite skalieren: zunächst erfolgt die Ausstrahlung als IP-Fernsehprogramm, dann bei Erreichung von Massenmarktreichweiten kann auf herkömmliche DVB-Ausstrahlung umgestiegen werden. Im Optimalfall werden nur noch DVB-SI-Daten sowie die AIT übertragen. In der AIT wird eine URL transportiert, welche auf eine CE-HTML-Seite verweist. Diese ist entweder über das Internet erreichbar oder wird bereits mit dem DVB-Stream gesendet, wodurch sich das Datenvolumen über das DVB-Netz im Vergleich zum Senden von Video- und Audiodaten nicht wesentlich erhöht. Die CE-HTML-Seite kann durch den gemäß HbbTV-Spezifikation integrierten Browser im Endgerät des Zuschauers abgerufen werden. Damit startet dann ein in der CE-HTLM-Seite vorgesehener, z. B. über JAVA®-script implementierter, Mechanismus, welcher eine Bewegtbild-URL aufruft. Die daraufhin erhaltenen Daten werden über ein Videoobjekt als Vollbild angezeigt. Durch die Signalisierung als Autostart Applikation wird der Eindruck eines normalen TV-Kanals noch verstärkt. Wenn der Zuschauer auf den Kanal mit seiner Fernbedienung wechselt, laufen aufgrund der beschriebenen Signalisierung im Hintergrund automatisch die Prozesse zum Anzeigen des IP-Fernsehprogramms ab. Durch die erfinderische Bereitsstellung des IP-Fernsehprogramms muss eine gemäß z. B. des HbbTV-Standards implementiert Empfangsbox nicht verändert werden. Der Anbieter des IP-Fernsehprogramms trifft die Vorkehrungen zur Durchführung des Verfahrens.

Aus diesem Verfahren ergeben sich für die Anbieter von HbbTV Angeboten, für die DVB- Netzbetreiber und die Fernsehzuschauer ganz konkrete Vorteile:

Die Erfindung ermöglicht eine gleichberechtigte Platzierung der Angebote neben etablierten TV-Sendern auf HbbTV fähigen DVB-Empfangsgeräten auf dem größten und besten Bildschirm eines Haushalts. Rückkanal basierte interaktive Angebote verschmelzen diskriminierungsfrei mit reinen Broadcast Angeboten. Die Online-Distributionskosten wachsen mit der tatsächlichen Reichweite und sind nicht bereits beim Senderstart durch fixe DVB-Distributionskosten determiniert. Bei dem Schnittpunkt der Online-Distributionskosten zu den DVB-Distributionskosten für Daten- und Bandbreitenintensive Audio- und Videoströmen kann die Infrastruktur und Zuführungstechnologie ohne Reichweitenverlust auf den jeweils anderen Distributionsweg gewechselt und skaliert werden. Die Erfindung ermöglicht ein einheitliches und etabliertes Management der DVB-Struktur in DVB-Netzen, ohne zusätzlichen Aufwand für den Netzbetreiber und die Gerätehersteller. Es ist eine Homogene Vermarktung über alle HbbTV fähigen DVB-Endgeräte möglich. Über den konventionellen Übertragungsweg können zudem mehr Programme signalisiert werden. In DVB-Netzen werden analoge Frequenzen in digitale Transponder-Äquivalente umgesetzt, die z. B. beim Satellitentransponder ca. 35 Mbit/s pro Transponder erlauben. Diese Bandbreite kann ohne weitere Beschränkung in unterschiedlich datenintensive Programme unterteilt werden. Wie viel Bandbreite ein Programm dann jeweils belegt, liegt an den zu übertragenden Komponenten des Programms. Wenn die datenintensiven Video- und Audiokomponenten weggelassen werden, was durch die erfindungsgemäße Signalisierung ohne Modifikation der Empfängergeräte möglich ist, kann eine höhere Anzahl von Programmen auf einem Transponder-Äquivalent übertragen werden.

### Bezugszeichen

| | |
|---|---|
| 10 | IP-Fernsehprogramm |
| 11 | DBV-Fernsehprogramm |
| 20 | Streaming-Server |
| 21 | Bewegtbild-URL |
| 22 | Datenquelle |
| 30 | paketvermitteltes Netzwerk |
| 40 | Zuschauer |
| 41 | Anzeigegerät/Empfangsgerät |
| 50 | Signalisierungseinrichtung |
| 51 | Application Information Table AIT |
| 52 | Zugriffsdaten |
| 52.1 | Ergänzende Zugriffsdaten |
| 52.2 | Datenkarussell |
| 53 | CE-HTML-Seite |
| 54 | URL zu der CE-HTML-Seite (53) |
| 55 | Webserver |
| 56 | Datenquelle |
| 60 | Übermittlungseinrichtung |
| 61 | DVB-Transportstrom |
| 70 | Konventioneller Übertragungsweg |
| 71 | Network Information Table NIT |
| 80 | Broadcast-Anbieter |

## Patentansprüche

1. Verfahren zum Bereitstellen eines IP-Fernsehprogramms (10) für potentielle Zuschauer (40), umfassend die folgenden Schritte:
- Bereitstellen einer über eine Bewegtbild-URL (21) und ein paketvermitteltes Netzwerk (30) erreichbaren Zugriffsmöglichkeit auf das IP-Fernsehprogramm (10);
- Beschreiben mindestens einer Application Information Table AIT (51) mit Zugriffsdaten (52) für den Zugriff auf das IP-Fernsehprogramm (10);
- Übermitteln der beschriebenen AIT (51) zu potentiellen Zuschauern (40) als Teil mindestens eines DVB-Transportstroms (61) auf einem konventionellen Übertragungsweg (70).

2. Verfahren nach einem der vorhergehenden Ansprüche,
wobei die Zugriffsdaten (52) innerhalb der mindestens einen AIT (51) als automatisch zu startende Anwendung gekennzeichnet werden.

3. Verfahren nach einem der vorhergehenden Ansprüche,
wobei das Übermitteln der mindestens einen AIT (51) wiederholt und/oder in mindestens einer Program Map Table PMT erfolgt.

4. Verfahren nach einem der vorhergehenden Ansprüche, umfassend zusätzlich den Schritt:
- Übermitteln von ergänzenden Zugriffsdaten (52.1) in einem Daten-Karussell (52.2), bevorzugt in einem DSM-CC Daten-Karussell, als Teil des mindestens einen DVB-Transportstroms (61) auf einem konventionellen Übertragungsweg (70).

5. Verfahren nach einem der vorhergehenden Ansprüche, weiterhin umfassend den Schritt:
- Übermitteln des IP-Fernsehprogramms (10) zu mindestens einem Zuschauer (40) über das paketvermittelte Netzwerk.

6. Verfahren nach einem der vorhergehenden Ansprüche,
wobei das Übermitteln des IP-Fernsehprogramms (10) über ein Videoobjekt, das Bestandteil der Zugriffsdaten (52) oder der ergänzenden Zugriffsdaten (52.1) ist oder das auf einem über das paketvermittelte Netzwerk erreichbaren Server (20, 55) vorliegt, erfolgt.

7. Verfahren nach einem der vorhergehenden Ansprüche,
wobei das Videoobjekt die Bewegtbild-URL (21) aufruft.

8. Vorrichtung zum Bereitstellen eines IP-Fernsehprogramms (10) für potentielle Zuschauer (40), umfassend:
- einen über eine Bewegtbild-URL (21) und ein paketvermitteltes Netzwerk (30) erreichbaren Streaming-Server (20), welcher eine Datenquelle (22) aufweist, aus der das IP-Fernsehprogramm (10) auslesbar ist;
- eine Signalisierungseinrichtung (50), mittels welcher mindestens eine Application Information Table AIT (51) mit Zugriffsdaten (52) für den Zugriff auf das IP-Fernsehprogramm (10) beschreibbar ist.
- eine Übermittlungseinrichtung (60), welche eingerichtet ist, die mindestens eine AIT (51) als Teil mindestens eines DVB-Transportstroms (61) auf einem konventionellen Übertragungsweg (70) zu potentiellen Zuschauern (40) zu übermitteln.

9. Vorrichtung nach Anspruch 8, wobei die Übermittlungseinrichtung (60) zusätzlich eingerichtet ist, ergänzende Zugriffsdaten (52.1) in einem Daten-Karussell (52.2) als Teil des mindestens einen DVB-Transportstroms (61) auf einem konventionellen Übertragungsweg (70) zu übermitteln.

10. Vorrichtung nach einem vorhergehenden Vorrichtungsansprüche,
wobei die Übermittlungseinrichtung (60) eingerichtet ist, die AIT (51) wiederholt und/oder in mindestens einer Program Map Table (PMT) zu übermitteln.

11. Verfahren nach einem der vorhergehenden Verfahrensansprüche oder Vorrichtung nach einem der vorhergehenden Vorrichtungsansprüche,
wobei die Zugriffsdaten (52)
- die Bewegtbild-URL (21) und/oder
- eine CE-HTML-Seite (53) und/oder
- eine URL (54), welche eine CE-HTML-Seite (53) adressiert, wobei die CE-HTML-Seite (53) auf einem über das paketvermittelte Netzwerk erreichbaren Server (55,20), bevorzugt dem Streaming-Server (20), gespeichert ist oder Bestandteil der ergänzenden Zugriffsdaten (52.1) ist,
enthalten.

12. Verfahren nach einem der vorhergehenden Verfahrensansprüche oder Vorrichtung nach einem der vorhergehenden Vorrichtungsansprüche,
wobei die ergänzenden Zugriffsdaten (52.1)
- eine CE-HTML-Seite (53)
enthalten.

13. Verfahren nach einem der vorhergehenden Verfahrensansprüche oder Vorrichtung nach einem der vorhergehenden Vorrichtungsansprüche,
wobei die Bewegtbild-URL (21) statischer Bestandteil der Zugriffsdaten (52) und/oder der ergänzenden Zugriffsdaten (52.1) ist oder dynamisch bestimmbar ist, bevorzugt mittels JAVA®-script bestimmbar ist, wobei das JAVA@-script Bestandteil der Zugriffsdaten (52) und/oder der ergänzenden Zugriffsdaten (52.1) ist.

14. Verfahren nach einem der vorhergehenden Verfahrensansprüche oder Vorrichtung nach einem der vorhergehenden Vorrichtungsansprüche,
wobei die verwendeten CE-HTML-Seiten (53) durch einen in einem Empfangsgerät (41) eines potentiellen Zuschauers (40) integrierten Browser abrufbar und/oder darstellbar sind.
